# EUROPÄISCHE PATENTSCHRIFT

(11) **EP 0 531 251 B1**
(45) Veröffentlichungstag und Bekanntmachung des Hinweises auf die Patenterteilung: **24.04.1996**
(21) Anmeldenummer: 92810588.1
(22) Anmeldetag: 03.08.1992
(51) Int. Cl.: B31D 3/02, B32B 31/20, B65H 29/22

(54) **Verfahren zum Herstellen eines Wabenkerns aus einer bandförmigen Folie, Vorrichtung zur Durchführung des Verfahrens und Verwendung des Wabenkerns als Wabenkern von kontinuierlich hergestellten Verbundplatten**
Method and apparatus for making a honey comb case from foil webs, and use of such a case as case for continuously produced composite panels
Procédé et dispositif pour la fabrication d'un âme en nid d'abeilles à partir de feuilles en bandes, et utilisation de ladite âme comme âme pour des panneaus fabriqués en continu

(30) Priorität: 05.08.1991 CH 2315/91
(43) Veröffentlichungstag der Anmeldung: 10.03.1993
(73) Patentinhaber: ALUSUISSE-LONZA SERVICES AG, CH-8034 Zürich (CH)
(72) Erfinder: Meier, Johannes, CH-8212 Neuhausen am Rheinfall (CH)

(56) Entgegenhaltungen:
- EP-A- 0 299 885
- EP-A- 0 335 127
- EP-A- 0 507 733
- CH-A- 359 533
- GB-A- 717 072
- US-A- 3 655 475
- US-A- 4 025 681
- US-A- 4 229 243

## Beschreibung

Die Erfindung betrifft ein Verfahren zum Herstellen eines auseinandergezogenen Wabenkerns aus einer bandförmigen Folie, welche von einer Bandrolle abgewickelt, in gleichmässigen Abständen mit Klebstreifen versehen und in Abwickelrichtung in Streifen geschnitten wird, die Streifen jeweils mit den Klebstreifen parallel zueinander versetzt aufeinander gestapelt und unter Druck miteinander verklebt und anschliessend auseinandergezogen werden. Die Erfindung betrifft ferner eine Vorrichtung zur Durchführung des Verfahrens und die Verwendung des Wabenkerns zur kontinuierlichen Herstellung einer Verbundplatte.

Bei dem Verfahren gemäss GB-A-1 602 778 zur Herstellung eines Wabenkerns wird die Folie nach dem Abrollen von der Bandrolle in Längsrichtung, d.h. in Abwickelrichtung der Folie, mit Klebstreifen bestückt. Dann wird eine zweite gleichbehandelte Folie von einer zweiten Bandrolle abgewickelt und mit der ersten Folie unter Pressung verklebt. Anschliessend werden von dem intermittierend geförderten, nun zweilagigen Folienband quer zur Abwickelrichtung Streifen gleicher Breite abgeschnitten, wobei die Breite der gewünschten Wabenkernhöhe entspricht. Die Streifen werden mit den Klebstreifen zueinander versetzt gestapelt und unter Pressung verklebt und anschliessend auseinandergezogen.

Bei einem ähnlichen bekannten Verfahren werden von der Folie nach dem Abrollen von der Bandrolle durch Schnitte quer zur Abwickelrichtung Tafeln abgeschnitten, die mit den in Abwickelrichtung aufgebrachten Klebstreifen zueinander versetzt gestapelt und miteinander unter Pressung verklebt werden. Von den so gebildeten Stapeln werden wiederum in Richtung quer zur Abwickelrichtung von der Bandrolle Streifen einer der gewünschten Wabenkernhöhe entsprechenden Breite abgetrennt und dann in der gleichen Art weiterverarbeitet wie bei dem vorgenannten Verfahren.

Solche Verfahren lassen sich der CH-A 359 533 und der GB-A 717 072 entnehmen.

Um ein genaues Fertigmass der Wabenkernhöhe zu erhalten, ist bei beiden Verfahren eine Nachbearbeitung durch Fräsen oder dergleichen erforderlich.

Die mit diesen bekannten Verfahren herstellbaren Wabenkerne haben eine durch die Breite der Folienbänder vorgegebene Wabenkernbreite und eine auf eine beschränkte Anzahl der zu stapelnden Streifen oder Tafeln begrenzte Wabenkernlänge. Die Bandbreite beträgt maximal etwa 180 cm, da breitere Folienbänder nicht erhältlich sind, so dass nur Wabenkernbreiten unter etwa 150 cm herstellbar sind. Ferner ist die Herstellung insbesondere wegen der Notwendigkeit, ein genaues Mass der Wabenkernhöhe durch eine gesonderte spanende Bearbeitung durch Fräsen oder dergleichen sicherzustellen, aufwendig und unwirtschaftlich, weil das obenerwähnte Abtrennen der Streifen nicht massgenau genug ist, denn an den Stellen, wo sich der Klebstoff befindet, sind die Streifenpackungen in der Breite immer schmaler als an den anderen Stellen.
Aus der US-A-3 655 475 ist ferner ein Wabenkernherstellungsverfahren der gattungsgemässen Art bekannt, bei dem die Folienbreite etwas mehr als das doppelte der Höhe des späteren Wabenkerns beträgt. Die Folie wird quer zur Längsrichtung einseitig in gleichem Abstand mit Klebstreifen versehen, wobei die Randbereiche und die Mitte der Folie freibleiben und die Klebstreifen so angeordnet sind, dass auf einer Hälfte der gesamten Folienbreite sich Streifen befinden und auf der anderen Hälfte der Folienbreite sich ebenfalls Streifen befinden, die jedoch gegenüber der anderen Hälfte versetzt angeordnet sind. Die Randpartien und die Mittelpartie der Folie sind klebstreifenfrei. An einem Rand der Folie und in der Nähe der Mitte, jedoch jenseits von diesem Rand, werden in Abwickelrichtung auf gleicher Höhe örtlich präzis angeordnete Lochungen angebracht. Die Folie wird anschliessend in der Mitte getrennt. Dann werden die zwei Streifen durch eine Rollenanordnung so geführt, dass die beiden Folienstreifen bei gleich orientierter Klebstreifenanordnung übereinander zu liegen kommen, d.h. die Frontseite eines Folienstreifens liegt an der Rückseite des anderen Folienstreifens an. Dabei wird die Lochung dazu genutzt, die beiden Streifen so zu plazieren, dass die Klebestreifen des einen Streifens genau auf die Mitten der Lücken des anderen Streifens zu liegen kommen. Die Doppelstreifen werden anschliessend gestapelt, unter Pressung verklebt und durch Besäumung von den nicht mit Klebstreifen versehenen Rändern befreit.

Diese Vorgehensweise führt zwar im Gegensatz zu den vorgenannten Verfahren vorteilhaft zu Wabenkernen von im Prinzip beliebiger Breite, weist jedoch den wesentlichen Nachteil auf, dass durch die Besäumung ein grosser Verlust an Folienmaterial in Kauf genommen werden muss. Zudem ist durch diese zusätzliche Bearbeitung wie bei den vorgenannten Verfahren ein genaues Endmass der Wabenkernhöhe aus vorgenannten Gründen nicht möglich.

Es ist weiter bekannt (US-A-4 229 243) bandförmige Folie zum Herstellen eines Wabenkerns mit einer Breite einzusetzen, die der Breite des Wabenkerns entspricht, die auf eine der Wabenkernhöhe entsprechende Länge abgelengt wird.

Bekannt ist zudem, Wabenkerne der beschriebenen Art in auseinandergezogenem Zustand beidseitig mit Deckschichten sandwichartig zu einem Verbundmaterial zusammenzufügen, welches sich durch geringes Gewicht und vergleichsweise hohe Festigkeit auszeichnet. Dies ist jedoch bisher nur in Stückfertigung möglich. Es besteht jedoch Bedarf, einen preisgünstigen und ein genaues Endmass aufweisenden Wabenkern in einer Form vorrätig zu haben, die eine kontinuierliche Herstellung von Verbundplatten ermöglicht, was zumindest einen praktisch beliebig langen einstückigen Wabenkern notwendig macht.
Der Erfindung liegt somit die Aufgabe zugrunde, ein Verfahren zur Herstellung eines Wabenkerns der im Oberbegriff des Anspruchs 1 beschriebenen Art zu schaffen, das einen Wabenkern praktisch beliebiger Abmessung mit sehr genauer Wabenhöhe bei geringem Aufwand und unter möglichst voller Ausnützung des Folienmaterials, d.h. praktisch abfallfrei, herzustellen gestattet, und eine Vorrichtung zur Durchführung des Verfahrens vorzuschlagen. Der Wabenkern soll ferner bei kontinuierlich hergestellten Verbundplatten verwendbar sein.

Erfindungsgemäss wird die gestellte Aufgabe durch ein Verfahren gelöst, welches sich nach dem Wortlaut des Anspruchs 1 auszeichnet. Vorteilhafte Weiterbildungen des erfindungsgemässen Verfahrens sind durch die Merkmale der Ansprüche 2 bis 12 gekennzeichnet.
Die erfindungsgemässe Vorrichtung zur Durchführung des erfindungsgemässen Verfahrens ist gekennzeichnet durch die Merkmale des Anspruchs 13. Weitere vorteilhafte Ausführungsformen der erfindungsgemässen Vorrichtung ergeben sich aus den Merkmalen der Ansprüche 14 bis 24.

Die Verwendung der nach dem erfindungsgemässen Verfahren hergestellten auseinandergezogenen Wabenkerne erfolgt in erfindungsgemässer Weise, wie sie durch die Ansprüche 25 und 26 gekennzeichnet ist. Besonders vorteilhaft ist es, dass bei entsprechender Wahl des Verhältnisses zwischen Streifenbreite und Folienbandrollenbreite quer zur Abwickelrichtung das Verfahren nach der Erfindung ein abfalloses Zerschneiden der Folie in Streifen ermöglicht.

Die Streifen, die ohne besonderen Aufwand in bekannter Weise genau auf das Mass der gewünschten Wabenkernhöhe geschnitten werden können, werden vor einer Weiterverarbeitung zwischengelagert. Dies geschieht zweckmässigerweise dadurch, dass die Streifen zu Streifenrollen aufgewickelt werden und dann verfahrensgemäss zum versetzten Stapeln und Verkleben unter Einwirkung erhöhter Temperatur und einer Presskraft die Streifen abgerollt und quer zur Abwickelrichtung auf die gewünschte Länge geschnitten werden.

Ein weiterer Vorteil des erfindungsgemässen Verfahrens liegt darin, dass praktisch beliebige Wabenkernbreiten erhalten werden können, weil die Streifen von den Streifenrollen abgerollt und in Richtung quer zur Abwickelrichtung, entsprechend der gewünschten Wabenkernbreite, praktisch frei wählbar abgeschnitten werden können. Die erhaltene Stapeleinheit kann in der zusammengepressten Form zwischengelagert werden, wodurch der Aufwand an Lagerplatz minimiert wird, oder direkt anschliessend auseinandergezogen werden. Es ist somit nach dem erfindungsgemässen Verfahren, gegebenenfalls unter Benutzung der erfindungsgemässen Vorrichtung zur Durchführung des erfindungsgemässen Verfahrens, möglich, Wabenkerne mit praktisch beliebigen Abmessungen kontinuierlich zu fertigen. Ein derart kontinuierlich gefertigter Wabenkern kann in vorteilhafter Weise zur kontinuierlichen Herstellung einer Verbundplatte mit dem auseinandergezogenen Wabenkern als Kern und mindestens einer Deckschicht verwendet werden.

Weitere Einzelheiten der Erfindung ergeben sich nachfolgend aus den schematischen Zeichungen. Diese zeigen beispielhaft in:
- Figur 1: in perspektivischer Darstellung die Herstellung der Streifen aus einer bandförmigen Metallfolie,
- Figuren 2a, 2b: in perspektivischer Darstellung und in Seitenansicht die versetzte Anordnung der Klebstreifen, der Streifenbänder und des Streifens,
- Figuren 3a, 3b: in perspektivischen Darstellungen einen Ausschnitt eines auseinandergezogenen Wabenkerns und eine einzelne Wabe daraus,
- Figur 4: ein Ausführungsbeispiel der Vorrichtung zur Herstellung des Wabenkerns in Seitenansicht,
- Figur 5: einen Schnitt A-A von Figur 4 mit weiteren Details,
- Figuren 6, 7: weitere Ausführungsbeispiele von Vorrichtungen zur Herstellung eines Wabenkerns in Seitenansichten und,
- Figur 8: die Verwendung des Wabenkerns zur kontinuierlichen Herstellung einer Verbundplatte.

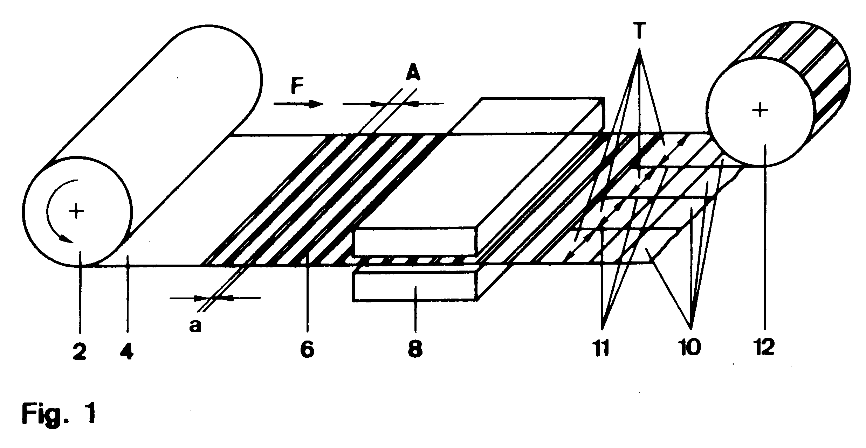

Gemäss Figur 1 wird von einer Bandrolle 2 eine Metallfolie 4 in Richtung des Pfeils F abgewickelt und in Querrichtung zur Abwickelrichtung in gleichmässigen Abständen A mit Klebstreifen 6 versehen. Die Klebstreifen 6 werden z.B. an einer Trockenstation 8 getrocknet. Sie haften fest an der Folie 4, weisen aber bei oberflächlicher Berührung mit weiterer Metallfolie keine Klebwirkung auf. Mittels eines nicht dargestellten Schneidwerkzeuges wird die Folie 4 bei 11 in Streifen 10 gleicher Breite T geschnitten. Die Streifen 10 werden zu Streifenrollen 12 aufgewickelt und zwischengelagert. Vorteilhaft ist es, die Breite der bandförmigen Metallfolie 4 bzw. die Breite T der Streifen 10 so zu wählen, dass ein abfalloses Zerschneiden der Metallfolie 4 in Streifen 10 erfolgt. Es ist ersichtlich, dass Streifen 10 von beliebiger Länge geschnitten und zu Streifenrollen 12 aufgewickelt werden können.

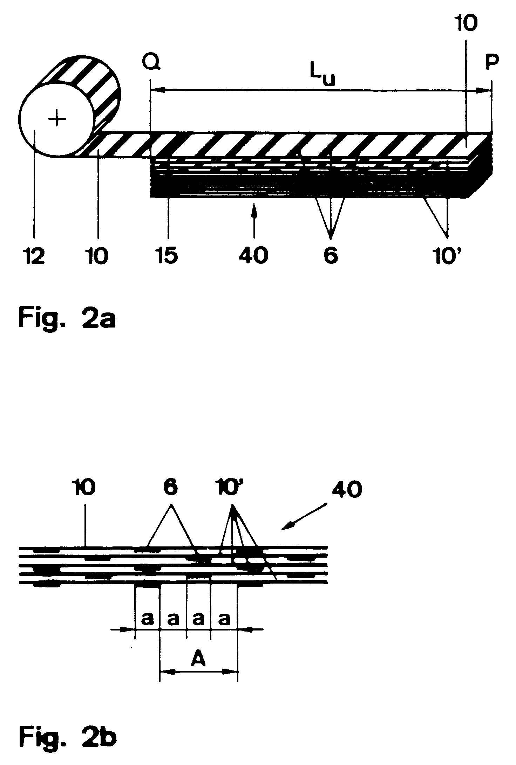

Gemäss Figur 2a wird ein Stück des Streifens 10 von der Streifenrolle 12 abgewickelt, auf das oberste Streifenband 10′ eines Stapels von Streifenbändern 10′ derart positioniert, dass die Klebstreifen 6 des Streifens 10 und des obersten Streifenbandes 10′ gegeneinander versetzt sind, bevorzugt derart gegeneinander versetzt sind, dass die Klebstreifen 6 des Streifens 10 in die Mitten der klebstreifenfreien Lücken des oberen Streifenbandes 10′ zu liegen kommen. Der Streifen 10 wird anschliessend auf die gewünschte Länge Lᵤ bei 15 geschnitten. Durch mehrfache Wiederholung dieses Vorganges entsteht eine Stapeleinheit 40 mit alternierend versetzt angeordneten Klebstreifen 6 der Streifenbänder 10′, wenn der Streifen 10 bzw. die einzelnen Streifenbänder 10′ jeweils mit den benachbarten Streifenbändern 10′ unter Ausübung von Druck und je nach verwendetem Klebstoff und gegebenenfalls erhöhter Temperatur durch die Klebstreifen 6 miteinander verbunden sind. Als Klebstoff wird vorzugsweise ein Schmelzkleber verwendet, der zur Verklebung des Streifens 10 und des Streifenbandes 10′ eine erhöhte Temperatur erfordert. Im zusammengepressten Zustand kann die Stapeleinheit 40 zwischengelagert werden.

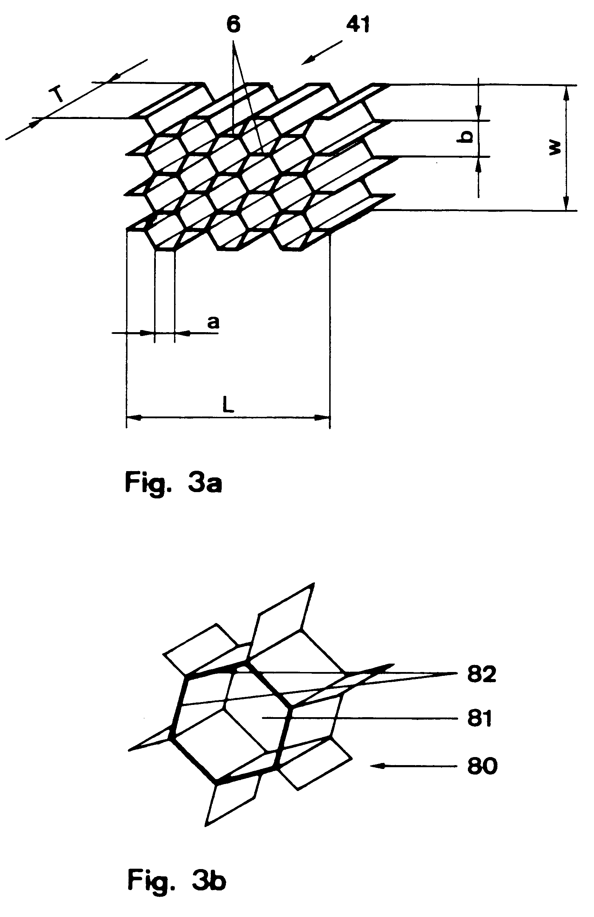

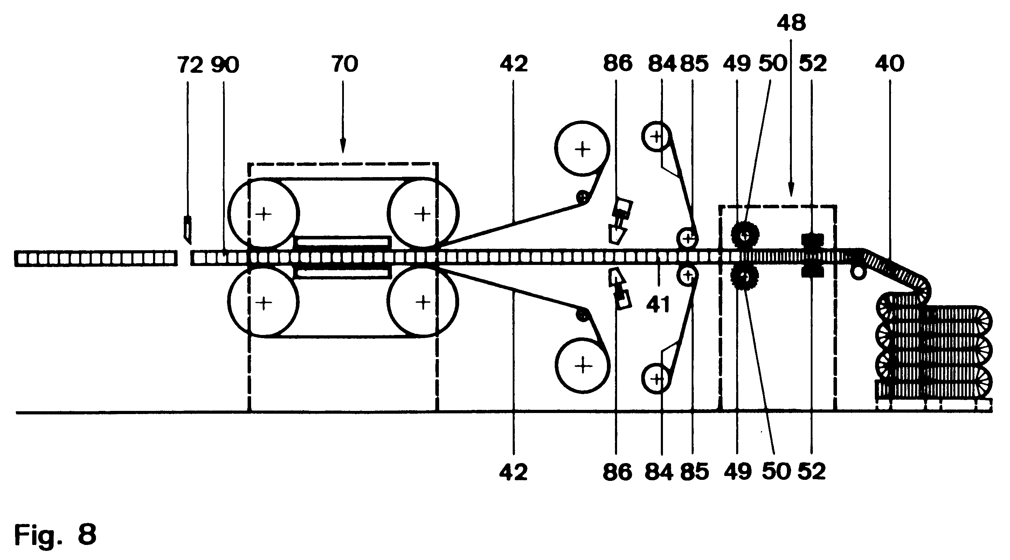

Werden, wie es Figur 2b zeigt, die Klebstreifen 6 mit gleichmässiger Breite a auf dem Streifen 10 so angeordnet, dass die klebstreifenfreie Lücke A das Dreifache von a ist, - d.h. A = 3a -, und erfolgt das Uebereinanderliegen der einzelnen Streifen 10 bzw. der Streifenbänder 10′ in obgenannter bevorzugter Weise, so bildet sich beim Auseinanderziehen der Stapeleinheit 40 ein Wabenkern 41 mit hexagonalen Waben, wie er in Figur 3a dargestellt ist. Figur 3b zeigt eine einzelne hexagonale Wabe 80. Durch das Auseinanderziehen der Stapeleinheit 40 verringert sich dessen Breite, welche ursprünglich der Streifenlänge Lᵤ entsprach, auf die Breite L. Die Wabenkernlänge W ist abhängig von der gestapelten Anzahl Streifenbänder 10′ und kann somit frei gewählt werden. Dies macht die kontinuierliche Herstellung von Verbundplatten 90 mit auseinandergezogenem Wabenkern 41 und mindestens einseitiger Deckschicht 42 möglich, indem beispielsweise von einem Zwischenlager die noch zusammengepresste Stapeleinheit 40 einer kontinuierlichen Verbundplattenfertigung zugeführt wird, was später mit Figur 8 detailliert beschrieben wird.

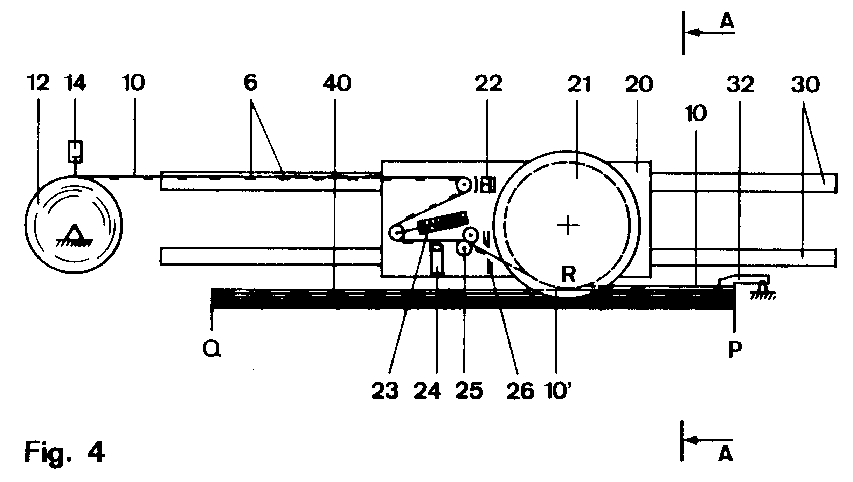

Mit Hilfe der Vorrichtung gemäss Figur 4 kann die versetzte Anordnung der Klebstreifen 6 der Streifenbänder 10′ und des Streifens 10 bewirkt werden. Ein Schlitten 20 ist auf Führungen 30 beweglich angeordnet. Auf dem Schlitten 20 befinden sich eine Positionserfassungseinheit 24, ein Positionsantrieb 25, eine Schneideinheit 26 und eine anhebbare Siegelrolle 21 zum Verkleben des Streifens 10 mit dem obersten Streifenband 10′. Die Beweglichkeit des Schlittens 20 ist derart, dass die Siegelrolle 21 mit ihrem Scheitelpunkt R eine unter ihr angeordnete Wabensammeleinheit 60, in der die Streifenbänder 10′ und der Streifen 10 zu einer Stapeleinheit 40 zusammengefügt werden, mindestens über ihre gesamte Breite Lᵤ, d.h. mindestens zu den Endpunkten P und Q, fahren kann. An einem Ende P der Stapeleinheit 40 befindet sich ein Klemmstück 32 zum Festhalten des Streifens 10. Die Siegelrolle 21 ist senkrecht anhebbar und vorzugsweise beheizbar. Sie kann je nach Steuerung während der Fahrt zu den Enden P und Q auf den Streifen 10 und mindestens das oberste Streifenband 10′ unter gegebenenfalls gleichzeitiger Erwärmung derselben Druck ausüben, wobei der Streifen 10 mit dem obersten Streifenband 10′ verklebt wird. Die Erwärmung ist, wie vorher bereits erwähnt, bei Klebstoffen notwendig, die nach oder bei erhöhter Temperatur Klebwirkung entfalten.

Von der Streifenrolle 12 wird ein Streifen 10 abgezogen und mit der Positionserfassungseinheit 24 die genaue Lage der Klebstreifen 6 erfasst. Die Klebstreifen 6 dienen zugleich als Steuermarken für das versetzte Positionieren des Streifens 10 relativ zum obersten Streifenband 10′ der Stapeleinheit 40. Der Positionsantrieb 25 schiebt nun den Streifen 10 so weit unter das Klemmstück 32, dass die Klebstreifen 6 genau um das Mass 2a versetzt zu den Klebstreifen 6 des darunterliegenden Streifenbandes 10′ zu liegen kommen. Das Klemmstück 32 hält den Streifen 10 in dieser Position fest. Diese Position bestimmt die Position des nachfolgenden aufeinanderzustapelnden Streifens. Vor, während oder nach der Positionierung des Streifens 10 fährt der Schlitten 20 in Richtung des Endes P, bis der Scheitelpunkt R der Siegelrolle 21 über dem Ende P steht, worauf sich die Siegelrolle 21 absenkt und auf den Streifen 10 bzw. die Stapeleinheit 40 unter gegebenenfalls gleichzeitiger Erwärmung desselben/derselben Druck ausübt. Im abgesenkten Zustand der Siegelrolle 21 fährt der Schlitten 20 in Richtung des anderen Endes Q, bis der Scheitelpunkt R der Siegelrolle 21 das andere Ende Q erreicht. Kurz vor Erreichen des anderen Endes Q wird mit Hilfe der Schneideinheit 26 der Streifen 10 auf die vorgewählte, durch die Enden P und Q begrenzte Länge Lᵤ, welche von der gewünschten Breite L des herzustellenden Wabenkerns 41 abhängig ist, abgelängt. Durch diesen Anpress- und Wäremeübertragungsvorgang wird der Streifen 10 mit dem obersten Streifenband 10′ verklebt. Der Streifen 10 wird nun als Teil der Stapeleinheit 40 zum Streifenband 10′. Anschliessend wiederholt sich der gesamte Vorgang von vorne, d.h. beginnend mit der Erfassung der Position der Klebstreifen 6 des Streifens 10 auf der Streifenrolle 12 und Zuführung desselben zu dem Ende P. Durch die ständige Wiederholung dieser Vorgänge entsteht eine kontinuierlich wachsende Stapeleinheit 40, die zu einem auseinandergezogenen Wabenkern 41 von praktisch beliebiger Länge W und Breite L führt.

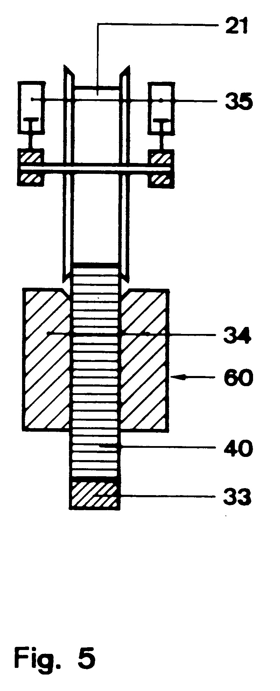

Figur 5 zeigt den Schnitt A-A von Figur 4 mit weiteren Details. Es sind die Wabensammeleinheit 60 und die Siegelrolle 21 gezeigt. Die Wabensammeleinheit 60 besteht aus einem absenkbaren Tisch 33 und Klemmbacken 34. Die Siegelrolle 21 drückt mit Hilfe der Druckzylinder 35 auf die Stapeleinheit 40, welche auf dem absenkbaren Tisch 33 lagert. Die Ebene des Tisches 33 verläuft parallel zur Bewegungsrichtung des Schlittens 20 und ist nur in der Anfangsphase zur Durchführung des Verfahrens unter Zuhilfenahme der Vorrichtung notwendig. Sobald sich aus der mehrfachen Verklebung von Streifenbändern 10′ eine Stapeleinheit 40 von einer derartigen Höhe gebildet hat, dass Klemmbacken 34, welche quer zur Andruckrichtung der Siegelrolle 21 mittels einer Kraft andrückbar und wegbewegbar sind, an die Stapeleinheit 40 angelegt werden können, kann der Tisch 33 entfallen. Die an die Stapeleinheit 40 angelegten Klemmbacken 34 halten dann allein die Stapeleinheit 40 in Position, so dass die Presskraft von der Siegelrolle 21 ausgehend auf die Stapeleinheit 40 bzw. auf den Streifen 10 und das oberste Streifenband 10′ einwirken kann. Im Verlauf der Durchführung des Verfahrens steigt die Höhe der Stapeleinheit 40 an. Damit ein konstanter Anpressdruck durch die Siegelrolle 21 gewährleistet ist, wird der von den Druckzylindern 35 ausgeübte Druck gesteuert und/oder die Stapeleinheit 40 durch Absenken bei gelösten Klemmbacken 34 in nicht dargestellter Weise geringfügig abgesenkt. Zur Absenkung kann in der Anfangsphase auch der Tisch 33 genutzt werden.

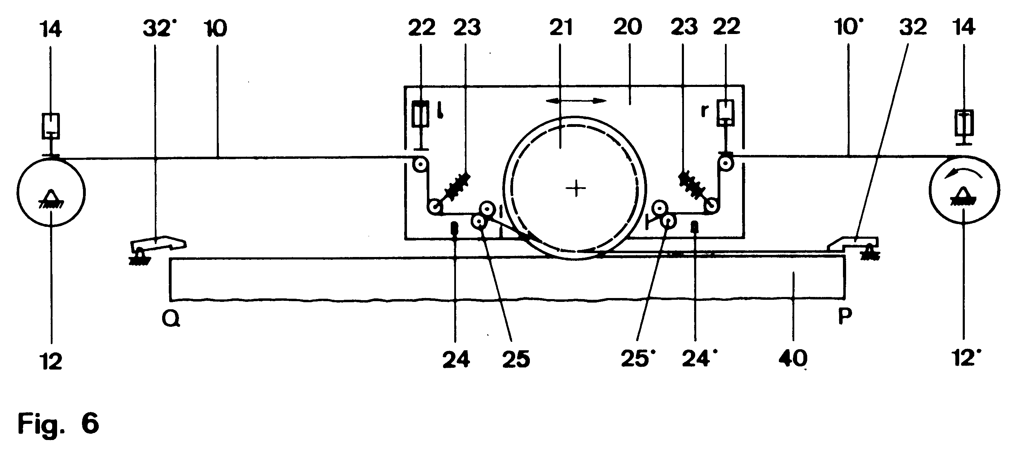

Bei der bisher beschriebenen Verfahrensweise unter Verwendung einer Vorrichtung, wie sie schematisch in Figur 4 dargestellt ist, weist bei der sich wiederholenden Fahrt des Schlittens 20 von beispielsweise dem Ende Q zum Ende P und zurück zum anfänglichen Ende Q nur die halbe Fahrt -- wie beschrieben nämlich nur die Fahrt vom Ende P nach Q -- der Siegelrolle 21 eine aktive Funktion auf. Um während der gesamten Fahrt die Siegelrolle 21 aktiv einzusetzen und damit die Effizienz der Vorrichtung zu erhöhen, ist eine Vorrichtung gemäss Figur 6 vorgesehen. Mindestens die auf dem Schlitten 20 montierten vorher beschriebenen notwendigen Aggregate 24, 25 befinden sich nun darauf in doppelter Ausführung. Sie sind von der Mitte des Schlittens gesehen spiegelbildlich auf jeweils einer Seite l, r angeordnet. Die linke Seite l dient der Zuführung des Streifens 10, welcher von der Streifenrolle 12 stammt. Ihr zugeordnet ist das Klemmstück 32 am Ende P. Die rechte Seite r dient der Zuführung des Streifens 10*, welcher von der Bandrolle 12* stammt. Dieser Seite r zugeordnet ist das Klemmstück 32* beim Ende Q. Fährt der Schlitten 20 in beschriebener Weise unter Ausübung von Druck und gegebenenfalls bei erhöhter Temperatur auf die Stapeleinheit 40 bzw. den abgelegten Streifen 10 vom Ende P zum Ende Q, so nimmt der Schlitten den Streifen 10* über die auf der rechten Seite r desselben angeordneten Aggregate mit und positioniert diesen am Ende Q in analoger Weise wie den vorher positionierten Streifen 10. Nach einer kurzen Anhebung der Siegelrolle 21 am Ende Q wird der Streifen 10* mit Hilfe des Klemmstücks 32* dort festgehalten, worauf ein neuer Streifen 10 bei der Fahrt des Schlittens 20 vom Ende Q in Richtung Ende P mitgeführt wird und sich dabei die Siegelrolle 21 zur Verklebung des Streifens 10* im abgesenkten Zustand befindet, d.h. unter Ausübung von Druck und Wärme den Streifen 10* mit dem darunterliegenden, nicht dargestellten Streifenband 10′ der Stapeleinheit 40 verklebt. Bei jeder Fahrt des Schlittens 20 vom Ende P zum Ende Q und vom Ende Q zum Ende P wird somit immer ein Streifen 10 oder 10* verklebt.

Das eben anhand von Figur 6 erläuterte Prinzip der Erhöhung der Effizienz der Vorrichtung kann in einer weiteren, nicht dargestellten Ausführungsform noch wirtschaftlicher gestaltet werden, indem zur Positionierung der Streifen 10 an den jeweiligen Enden P bzw. Q mehrere Positionserfassungseinheiten 24 und Positionsantriebe 25 auf jeweils einer Seite l, r des Schlittens 20 montiert sind, welche bei einer Fahrt des Schlittens 20 von einem Ende P bzw. Q zum anderen Ende Q bzw. P die Streifen 10 einer Seite l, r des Schlittens 20 mitführen und diese Streifen 10 am entsprechenden Ende P, Q nacheinander positioniert und festgehalten werden, worauf diese bei der Fahrt des Schlittens 20 unter Ausübung von Druck bei gegebenenfalls erhöhter Temperatur durch die abgesenkte Siegelrolle 21 mit dem obersten Streifenband 10′ der Stapeleinheit 40 verklebt werden. Bei einer solchen Anordnung der Vorrichtung ist es notwendig, dass die Siegelrolle 21 einen derart hohen Druck auf die Stapeleinheit 40 bzw. auf die abgelegten Streifen 10 ausübt und gegebenenfalls gleichzeitig eine genügend hohe Temperatur aufweist, die die Streifen 10 und das oberste Streifenband 10′ der Stapeleinheit 40 derart erwärmt werden, dass eine Verklebung der Streifen 10 und des obersten Streifenbandes 10′ der Stapeleinheit 40 bewirkt wird. Darüber hinaus ist bei mindestens teilweiser gleichzeitiger Positionierung der Streifen 10 eine Justierung der Streifen 10 untereinander notwendig, damit die Klebstreifen 6 der benachbarten Streifen 10 in versetzter Anordnung vorliegen.

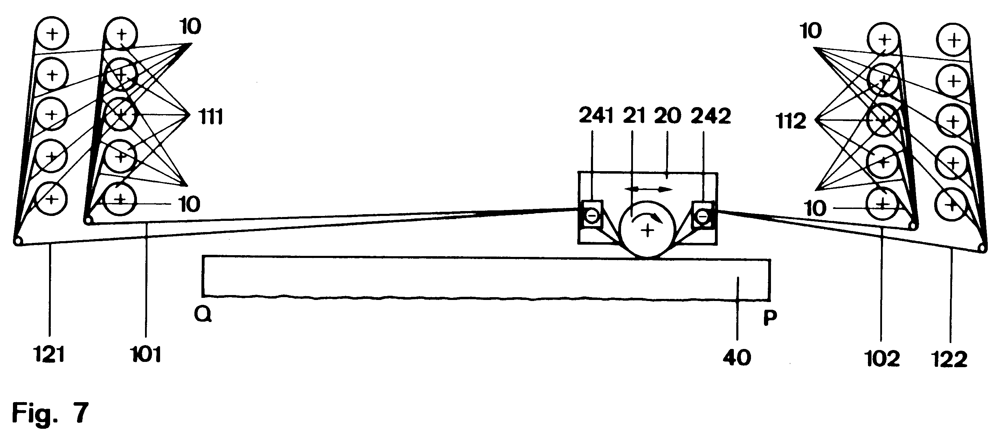

Eine andere Anordnung, der das Prinzip der Erhöhung der Effizienz der Vorrichtung zugrunde liegt, zeigt Figur 7 in stark vereinfachter Weise. Von einem Satz Streifenrollen 111 wird eine erste Anzahl 101 Streifen 10 mit auf Lücke versetzter Anordnung der Klebstreifen 6 gleichzeitig von einer Positionserfassungseinheit 241 bei der Bewegung des Schlittens 20 in Richtung des Endes P geführt, positioniert und festgehalten und bei der anschliessenden Bewegung des Schlittens 20 zurück in Richtung des anderen Endes Q wird von einem Satz Streifenrollen 112 eine zweite Anzahl 102 Streifen 10 mit auf Lücke versetzter Anordnung der Klebstreifen 6 gleichzeitig von einer zweiten Positionserfassungseinheit 242 zum Ende Q geführt, dort positioniert und festgehalten. Mit Ausnahme des kurzen Anhebens der Siegelrolle 21 für die Positionierung und das Festhalten ist die Siegelrolle 21 während der Fahrbewegung ständig in der Andruckposition, so dass sowohl die Anzahl 101 Streifen 10 und die Anzahl 102 Streifen 10 untereinander als auch mit dem obersten Streifenband 10′ der Stapeleinheit 40 verklebt werden. Wie aus Figur 7 ferner hervorgeht, können in analoger Weise noch jeweils an den beiden Enden P, Q eine weitere Anzahl 121, 122 Streifen 10 zugeführt werden. Selbstverständlich muss dementsprechend die Siegelrolle 21 ausgestaltet sein, so dass sie die Anzahl 101 und 121 bzw. 102 und 122 Streifen 10 und mindestens das oberste Streifenband 10′ der Stapeleinheit zur ausreichenden Verklebung gegebenenfalls erwärmen und zusätzlich den nötigen Druck aufbringen kann.

Figur 8 zeigt die Verwendung der nach dem erfindungsgemässen Verfahren, vorzugsweise unter Nutzung der erfindungsgemässen Vorrichtung, gefertigten Stapeleinheit 40 zur Herstellung einer Verbundplatte 90 mit einem auseinandergezogenen Wabenkern 41 und Deckschichten 42. Die mäanderförmig gelagerte Stapeleinheit 40 durchläuft eine Auseinanderziehvorrichtung 48, welche im wesentlichen aus zwei beidseits der Stapeleinheit 40 angeordneten drehbaren Rollen 50 besteht, die oberflächlich mit Bürsten 49 versehen sind. Die Bürsten wirken auf die Streifenbänder 10′ der Stapeleinheit 40 quer zur Stapelrichtung ein, indem ein nicht gezeigter Antrieb der Rollen 50 die Stapeleinheit 40 mit höherer Geschwindigkeit fördert, als dieser die Wabensammeleinheit 60 verlässt. Dies kann vorteilhaft in einfacher Weise dadurch geschehen, dass vor der Zuführung zu den Rollen 50 auf die Stapeleinheit 40 eine Rückhaltekraft einwirkt, die die durch den Antrieb der Rollen 50 ausgeübte Zugkraft bremst. Die Rückhaltekraft wird durch eine beidseits der Stapeleinheit 40 angeordnete Bremsvorrichtung 52, insbesondere durch beidseits angeordnete Bürstenleisten bewirkt. Nach dem Durchlaufen der Rollen 50 ist die Stapeleinheit 40 zu einem expandierten Wabenkern 41 auseinandergezogen. Dieser auseinandergezogene Wabenkern 41 wird beidseits an den Stirnkanten 82 der Wabenzellen 80 mit Klebstoff, vorzugsweise in Form von Folien 84, versehen, worauf die Deckschichten 42 aufgelegt werden. Das aus dem Wabenkern 41 mit beidseits angeordneten Klebfolien 84 und darüberliegenden Deckschichten 42, welche insbesondere Aluminiumdeckschichten sind, bestehende Sandwich wird einer Durchlaufpresse 70 zugeführt und dort zu einer Verbundplatte 90 verbunden. Durch Abstimmung der Laufgeschwindigkeiten der Durchlaufpresse 70 und des Antriebs der Rollen 50 wird eine kontinuierliche Verbundplattenherstellung erreicht. Mit gezielt leichter Erhöhung der Laufgeschwindigkeit der Durchlaufpresse 70 kann vorzugsweise auch das Auseinanderziehen des Wabenkerns 41 zumindest unterstützt werden. Zum Zweck der optimalen Bereitstellung von Klebstoff an den Stirnkanten 82 der Wabenzellen 80 ist es von besonderem Vorteil, wenn die Klebstoffolie 84, wie in Figur 8 gezeigt, nach dem Auflegen auf den auseinandergezogenen Wabenkern 41 mit einem heissen gasförmigen Medium, insbesondere Heissluft, beaufschlagt wird. Dies geschieht in einfacher Weise durch beidseits des auseinandergezogenen Wabenkerns 41 angeordnete Heissluftgebläse 86. Diese bzw. diese Vorgehensweise bewirken/bewirkt, dass die Klebstoffolie 84 aufweicht, bzw. aufschmilzt und nur an den Stirnkanten 82 der Wabenzellen 80 haften bleibt. Der Vorgang läuft so ab, dass die Klebstoffolie 84 über dem Inneren 81 der Wabenzellen 80 aufplatzt und durch die Spannung der Folie 84 bzw. die Klebstoffoberflächenspannung der Klebstoff sich vom Innern 81 der Wabenzellen 80 zu deren Stirnkanten 82 zurückzieht.

Die kontinuierlich hergestellte Verbundplatte 90 kann in an sich bekannter Weise durch eine Schneidvorrichtung 72 auf das gewünschte Mass abgelängt werden.

## Patentansprüche

1. Verfahren zum Herstellen eines auseinandergezogenen Wabenkerns (41) aus einer bandförmigen Folie (4), welche von einer Bandrolle (2) abgewickelt, in gleichmässigen Abständen (A) mit Klebstreifen (6) versehen und in Abwickelrichtung (F) in Streifen (10) geschnitten wird, die Streifen (10) jeweils mit den Klebstreifen (6) parallel zueinander versetzt aufeinandergestapelt und unter Druck miteinander unter Bildung einer Stapeleinheit (40) mit den Enden (P, Q) verklebt und auseinandergezogen werden,
dadurch gekennzeichnet,
dass die bandförmige Folie (4) in Streifen (10) mit einer Breite, die der gewünschten Wabenkernhöhe (T) entspricht, geschnitten wird, ein Streifen (10) über eine Positionserfassungseinheit (24) geführt wird, welche anhand der Klebstreifen (6) die Lage relativ zu einem ersten Ende (P) der Stapeleinheit (40) ermittelt und über eine elektronische Steuereinheit einen Positionsantrieb (25) sowie eine Schneideinheit (26) steuert, der Positionsantrieb (25) den Streifen (10) bezüglich der Stapeleinheit (40) am Ende (P) derart positioniert, dass die Klebstreifen (6) des Streifens (10) zwischen den Klebstreifen (6) des darunterliegenden Streifenbandes (10') zu liegen kommen und der Streifen (10) am Ende (P) festgehalten wird, der Streifen (10) beginnend beim Ende (P) sukzessiv in Richtung des anderen Endes (Q) mit dem vorher gestapelten darunterliegenden Streifenband (10') verklebt wird, und der Streifen (10) kurz vor der Verklebung am anderen Ende (Q) mit Hilfe der Schneideinheit (26) auf eine vorgewählte, durch die Enden (P, Q) begrenzte Länge (Lᵤ), welche die gewünschte Breite (L) des herzustellenden Wabenkerns (41) bestimmt, abgelängt wird, worauf sich der Vorgang wiederholt.

2. Verfahren nach Anspruch 1, dadurch gekennzeichnet, dass der Positionsantrieb (25) auf einem im wesentlichen parallel zur Oberfläche und mindestens über die ganze Länge (Lᵤ) der gestapelten Streifenbänder (10) beweglichen Schlitten (20) montiert ist und bei einer ersten Fahrbewegung des Schlittens (20) in Richtung des ersten Endes (P) zunächst den Streifen (10) bis in die Nähe des Endes (P) unter gleichzeitiger Ermittlung der Lage der Klebstreifen (6) relativ zum Ende (P) fährt, das Ende des Streifens (10) am Ende (P) positioniert und festgehalten wird, bei einer anschliessenden zweiten Fahrbewegung des Schlittens (20) in Richtung des anderen Endes (Q) auf den Streifen (10) und mindestens das zuletzt abgelegte Streifenband (10') ein Druck derart ausgeübt wird, dass der Streifen (10) über die Länge (Lᵤ) der gestapelten Streifenbänder (10') mit dem zuletzt gestapelten Streifenband (10') verklebt wird, wonach sich die Fahrbewegungen des Schlittens (20) wiederholen.

3. Verfahren nach Anspruch 1 oder 2, dadurch gekennzeichnet, dass mehrere Streifen (10) gleichzeitig mit versetzter Anordnung der Klebstreifen (6) über eine positionserfassungseinheit (24) geführt und gleichzeitig übereinander positioniert, festgehalten und verklebt werden.

4. Verfahren nach Anspruch 1 oder 2, dadurch gekennzeichnet, dass mehrere Streifen (10) gleichzeitig über jeweils eine jedem Streifen (10) zugeordneten Positionserfassungseinheit (24) geführt und mit auf Lücke versetzter Anordnung der Klebstreifen (6) gleichzeitig übereinander positioniert, festgehalten und verklebt werden.

5. Verfahren nach Anspruch 1 oder 2, dadurch gekennzeichnet, dass ein erster Streifen (10) oder eine erste Anzahl (101) Streifen (10) mit auf Lücke versetzter Anordnung der Klebstreifen (6) gleichzeitig über eine erste Positionserfassungseinheit (24) oder eine der ersten Anzahl (101) Streifen (10) entsprechenden Anzahl oder weniger Positionserfassungseinheiten (241) bei der Bewegung des Schlittens (20) in Richtung des Endes (P) geführt und positioniert und anschliessend festgehalten wird und ein zweiter Streifen (10) oder eine zweite Anzahl (102) Streifen (10) mit auf Lücke versetzter Anordnung der Klebstreifen (6) gleichzeitig über eine zweite Positionserfassungseinheit (24) oder eine, der zweiten Anzahl (102) Streifen (10) entsprechenden Anzahl oder weniger Positionserfassungseinheiten (242) bei der Bewegung in Richtung des anderen Endes (Q) geführt und positioniert wird, wobei die jeweils bereits positionierte und festgehaltene Anzahl (101 bzw. 102) Streifen (10) miteinander und mit dem darunterliegenden Streifenband (10') bzw. der positionierte und festgehaltene Streifen (10) mit dem darunterliegenden Streifenband (10') über die Länge (Lᵤ) verklebt wird.

6. Verfahren nach einem der Ansprüche 1 bis 5, dadurch gekennzeichnet, dass die Streifen (10) von einer Streifenrolle (12) abgewickelt werden.

7. Verfahren nach einem der Ansprüche 1 bis 6, dadurch gekennzeichnet, dass zur Herstellung der Klebstreifen (6) ein Kleber mit gegenüber dem Streifenmaterial herabgesetztem Reflexionsvermögen verwendet wird.

8. Verfahren nach Anspruch 7, dadurch gekennzeichnet, dass der Kleber zur Verminderung der Reflexion einen Farbstoff enthält.

9. Verfahren nach einem der Ansprüche 1 bis 8, dadurch gekennzeichnet, dass die Verklebung bei erhöhter Temperatur erfolgt.

10. Verfahren nach einem der Ansprüche 1 bis 9, dadurch gekennzeichnet, dass die Klebstreifen (6) des Streifens (10) in der Mitte zwischen dem Klebstreifen (6) des darunterliegenden Streifenbandes (10') zu liegen kommen.

11. Verfahren nach einem der Ansprüche 1 bis 10, dadurch gekennzeichnet, dass als bandförmige Folie (4) ein Band oder eine Folie aus Aluminium oder einer Aluminiumlegierung verwendet wird.

12. Verfahren nach einem der Ansprüche 1 bis 11, dadurch gekennzeichnet, dass der Wabenkern (41) zu hexagonalen Wabenzellen (80) auseinandergezogen wird.

13. Vorrichtung zur Durchführung des Verfahrens nach einem der Ansprüche 1 bis 12, dadurch gekennzeichnet, dass die Positionserfassungseinheiten (24, 241, 242) mindestens ein Positionsantrieb (25), mindestens eine Schneideinheit (26) und eine anhebbare Siegelrolle (21) zum Verkleben des/der Streifen/s (10) mit dem obersten Streifenband (10') der Stapeleinheit (40) auf einem Schlitten (20) montiert sind, der auf Führungen (30) derart beweglich angeordnet ist, dass die Siegelrolle (21) mit ihrem Scheitelpunkt (R) eine unter ihr angeordnete Wabensammeleinheit (60) über ihre gesamte Breite (Lᵤ) überstreichen kann, die Einwirkung des Drucks und der erhöhten Temperatur auf den/die Streifen (10) und zumindest das oberste Streifenband (10') durch die Siegelrolle (21) bewirkt wird und mindestens an einem Ende der Wabensammeleinheit (60) ein Klemmstück (32) zum Festhalten des/der Streifen/s (10) angeordnet ist.

14. Vorrichtung nach Anspruch 13, dadurch gekennzeichnet, dass der Schlitten (20) vor der Positionserfassungseinheit (24) einen Streifenstopper (22) zum Festhalten des Streifens (10) während der Stillstandsphase des Positionsantriebs (25) sowie eine Bandzugsregelung (23) aufweist.

15. Vorrichtung nach Anspruch 14, dadurch gekennzeichnet, dass zur Konstanthaltung der Spannung des Streifens (10) zwischen der Positionserfassungseinheit (24) und dem Streifenstopper (22) eine Bandzugsregelung (23) und gegebenenfalls bei Vorhandensein einer Streifenrolle (12) eine auf diese einwirkende Bandbremse (14) angeordnet ist.

16. Vorrichtung nach einem der Ansprüche 13 bis 15, dadurch gekennzeichnet, dass die Wabensammeleinheit (60) aus mindestens einem Paar parallel zur Richtung des sich aufbauenden Stapeleinheit (40) angeordneten Klemmbacken (34) besteht, wobei mindestens eine Klemmbacke (34) spreizbar ist.

17. Vorrichtung nach einem der Ansprüche 13 bis 16, dadurch gekennzeichnet dass zum Anfahren die Wabensammeleinheit (60) aus einem parallel zu den Führungen (30) angeordneten und quer dazu absenkbaren Tisch (33) besteht.

18. Vorrichtung nach einem der Ansprüche 13 bis 17, dadurch gekennzeichnet, dass die Siegelrolle (21) beheizbar ist.

19. Vorrichtung nach einem der Ansprüche 13 bis 18, dadurch gekennzeichnet dass der Druck der Siegelrolle (21) zur Verklebung des/der Streifen/s (10) und dem obersten Streifenband (10') der Stapeleinheit (40) durch mindestens einen Druckzylinder (35) bewirkt und gesteuert wird, vorzugsweise in Verbindung mit der Absenkung des Tisches (33).

20. Vorrichtung nach einem der Ansprüche 13 bis 19, dadurch gekennzeichnet, dass die Positionserfassungseinheit (24) eine Fotozelle ist.

21. Vorrichtung nach einem der Ansprüche 13 bis 20, dadurch gekennzeichnet, dass sich auf dem Schlitten (20) auch die Streifenrolle/n (12) befindet/en.

22. Vorrichtung nach einem der Ansprüche 13 bis 21, dadurch gekennzeichnet, dass zum Auseinanderziehen der die Wabensammeleinheit (60) verlassenden Stapeleinheit (40) zu einem auseinandergezogenen Wabenkern (41) mindestens eine die ganze Länge (Lᵤ) der Stapeleinheit (40) erfassende, oberflächlich mit Bürsten (49) versehene, drehbare Rolle (50) angeordnet ist, welche Bürsten (49) quer zur Stapelrichtung auf die Streifenbänder (10') der Stapeleinheit (40) ziehend einwirken und sich zwischen der/den Rollen (50) und der Stapeleinheit (40) eine Bremsvorrichtung (52) befindet, die eine Rückhaltekraft auf die Stapeleinheit (40) ausübt, die kleiner ist als die Zugkraft der mit den Bürsten (49) versehene/n Rolle/n (50).

23. Vorrichtung nach Anspruch 22, dadurch gekennzeichnet, dass die Rolle (50) mit einem Antrieb versehen ist.

24. Vorrichtung nach Anspruch 23, dadurch gekennzeichnet, dass die Bremsvorrichtung (52) eine mindestens einseitig über eine die ganze Länge (Lᵤ) der Streifenbänder (10') erfassende Bürstenleiste ist.

25. Verwendung des auseinandergezogenen Wabenkerns (41), hergestellt nach dem Verfahren nach einem der Ansprüche 1 bis 12, als Wabenkern von kontinuierlich hergestellten Verbundplatten (90) mit mindestens einer Deckschicht (42).

26. Verwendung des auseinandergezogenen Wabenkerns (41), hergestellt nach dem Verfahren nach einem der Ansprüche 1 bis 12, als Wabenkern aus bandförmiger Folie (4) von kontinuierlich hergestellten Verbundplatten (90) mit mindestens einer Deckschicht (42), wobei die bandförmige Folie (4) und die Deckschicht (42) aus Aluminium oder einer Alumimumlegierung bestehen.

## Claims

1. Method for the production of an expanded honeycomb core (41) from a foil web (4) which is unwound from a web roll (2), provided at regular intervals (A) with adhesive strips (6) and cut into strips (10) in the direction of unwinding (F), the strips (10) being stacked with their respective adhesive strips (6) parallel and offset from one another, then being bonded together under pressure to form a stack (40) with ends (P, Q) and expanded, characterised in that the foil web (4) is cut into strips (10) having a width corresponding to the desired honeycomb core height (T), one strip (10) is guided via a position detector (24) which, by way of the adhesive strips (6), determines its position relative to a first end (P) of the stack (40) and controls a positioning drive (25) and a cutting unit (26) via an electronic control unit, the positioning drive (25) positions the strip (10) relative to the stack (40) at the end (P) in such a manner that the adhesive strips (6) of the strip (10) are then situated between the adhesive strips (6) of the underlying strip (10') and the strip (10) is held at the end (P), beginning at the end (P) and working in the direction of the other end (Q), the strip (10) is then successively bonded to the previously stacked underlying strip (10') and, shortly before it is bonded to the other end (Q), the strip (10) is cut with the aid of the cutting unit (26) to a preselected length (Lᵤ) delimited by the ends (P, Q) and corresponding to the desired width (L) of the honeycomb core (41) to be produced, after which the process is repeated.

2. Method according to claim 1, characterised in that the positioning drive (25) is mounted on a slide (20) movable substantially parallel to the surface and at least over the entire length (Lᵤ) of the stacked strips (10) and, during a first movement of the slide (20) in the direction of the first end (P), first moves the strip (10) to the vicinity of the end (P) while simultaneously determining the position of the adhesive strips (6) relative to the end (P), the end of the strip (10) being positioned at the end (P) and held, then during a subsequent second movement of the slide (20) in the direction of the other end (Q), a pressure is exerted on the strip (10) and at least the last strip (10') stacked in such a manner that the strip (10) is bonded to the last strip (10') stacked over the length Lᵤ of the stacked strips (10'), after which the movements of the slide (20) are repeated.

3. Method according to claim 1 or claim 2, characterised in that a plurality of strips (10) are guided simultaneously via one position detector (24) with an offset arrangement of the adhesive strips (6) and are simultaneously positioned on top of one another, held and bonded.

4. Method according to claim 1 or claim 2, characterised in that a plurality of strips (10) are each guided simultaneously via respective position detectors (24) associated with each strip (10) and are simultaneously positioned on top of one another, held and bonded with a spaced offset arrangement of the adhesive strips (6).

5. Method according to claim 1 or claim 2, characterised in that a first strip (10) or a first number (101) of strips (10) with a spaced offset arrangement of the adhesive strips (6) is guided simultaneously via a first position detector (24) or a number of position detectors (241) corresponding to or less than the first number (101) of strips (10) when the slide (20) moves in the direction of the end (P) and is positioned and then held and a second strip (10) or a second number (102) of strips (10) with a spaced offset arrangement of the adhesive strips (6) is guided simultaneously via a second position detector (24) or a number of position detectors (242) corresponding to or less than the second number (102) of strips (10) when the slide moves in the direction of the other end (Q) and is positioned, the number (101 or 102) of strips (10) already positioned and held being bonded together and to the underlying strip (10') or the positioned and held strip (10) being bonded to the underlying strip (10') over the length (Lᵤ).

6. Method according to one of claims 1 to 5, characterised in that the strips (10) are unwound from a strip reel (12).

7. Method according to one of claims 1 to 6, characterised in that an adhesive with lower reflectivity than the strip material is used to produce the adhesive strips (6).

8. Method according to claim 7, characterised in that the adhesive contains a dye to reduce reflection.

9. Method according to one of claims 1 to 8, characterised in that bonding is effected at an elevated temperature.

10. Method according to one of claims 1 to 9, characterised in that the adhesive strips (6) of the strip (10) are then situated in the centre between the adhesive strips (6) of the underlying strip (10').

11. Method according to one of claims 1 to 10, characterised in that a web or a foil of aluminium or an aluminium alloy is used as the foil web (4).

12. Method according to one of claims 1 to 11, characterised in that the honeycomb core (41) is expanded to form hexagonal honeycomb cells (80).

13. Device for carrying out the method according to one of claims 1 to 12, characterised in that the position detectors (24, 241, 242), at least one positioning drive (25), at least one cutting unit (26) and a liftable sealing roller (21) for bonding the strip/s (10) to the uppermost strip (10') of the stack (40) are mounted on a slide (20) which is arranged to move on guides (30) in such a manner that the sealing roller (21) can sweep over the entire width (Lᵤ) of a honeycomb collecting unit (60) arranged below it via its vertex (R), the pressure and the elevated temperature act on the strip/s (10) and at least the uppermost strip (10') by means of the sealing roller (21) and a clamping element (32) for holding the strip/s (10) is arranged at least at one end of the honeycomb collecting unit (60).

14. Device according to claim 13, characterised in that the slide (20) is provided upstream of the position detector (24) with a strip stopper (22) for holding the strip (10) during the idle phase of the positioning drive (25) and with a web tension controller (23).

15. Device according to claim 14, characterised in that a web tension controller (23) and, if a strip reel (12) is present, optionally a band brake (14) acting on the latter, are arranged between the position detector (24) and the strip stopper (22) in order to keep the tension of the strip (10) constant.

16. Device according to one of claims 13 to 15, characterised in that the honeycomb collecting unit (60) consists of at least one pair of clamping jaws (34) arranged parallel to the direction of the stack (40) being formed, wherein at least one clamping jaw (34) can be pulled open.

17. Device according to one of claims 13 to 16, characterised in that, for starting, the honeycomb collecting unit (60) consists of a table (33) which is arranged parallel to the guides (30) and can be lowered transversely thereto.

18. Device according to one of claims 13 to 17, characterised in that the sealing roller (21) can be heated.

19. Device according to one of claims 13 to 18, characterised in that the pressure of the sealing roller (21) for bonding the strip/s (10) and the uppermost strip (10') of the stack (40) is produced and controlled by at least one pressure cylinder (35), preferably in association with lowering of the table (33).

20. Device according to one of claims 13 to 19, characterised in that the position detector (24) is a photocell.

21. Device according to one of claims 13 to 20, characterised in that the strip reel/s (12) is/are also situated on the slide (20).

22. Device according to one of claims 13 to 21, characterised in that at least one rotating roller (50) provided on its surface with brushes (49) and engaging the entire length (Lᵤ) of the stack (40) is provided to expand the stack (40) leaving the honeycomb collecting unit (60) to form an expanded honeycomb core (41), said brushes (49) pulling on the strips (10') of the stack (40) transversely to the stacking direction and a braking device (52) being situated between the roller/s (50) and the stack (40) and exerting a restraining force on the stack (40) which is smaller than the tensile force of the roller/s (50) provided with the brushes (49).

23. Device according to claim 22, characterised in that the roller (50) is provided with a drive.

24. Device according to claim 23, characterised in that the braking device (52) is a strip of brushes engaging the entire length (Lᵤ) of the strips (10') at least on one side.

25. Use of the expanded honeycomb core (41) produced by the method according to one of claims 1 to 12 as the honeycomb core of continuously produced composite panels (90) with at least one outer layer (42).

26. Use of the expanded honeycomb core (41) produced by the method according to one of claims 1 to 12 as the honeycomb core made of a foil web (4) of continuously produced composite panels (90) with at least one outer layer (42), the foil web (4) and the outer layer (42) consisting of aluminium or an aluminium alloy.

## Revendications

1. Procédé de fabrication d'une âme en nid d'abeilles (41), déployée à partir d'une feuille en bande (4) que l'on déroule d'un rouleau de bande (2), que l'on munit à intervalles réguliers (A), de rubans de colle (6) et que l'on coupe en bandelettes (10) selon la direction du déroulement (F), chacune des bandelettes (10) étant empilée l'une sur l'autre avec les rubans de colle (6) décalés parallèlement les uns par rapport aux autres et collés sous pression l'une à l'autre avec formation d'une pile (40) d'extrémités (P, Q) et déployée,
caractérisé
par le fait que l'on coupe la feuille en bande (4) en bandelettes (10) d'une largeur qui correspond à la hauteur désirée (T) de l'âme en nid d'abeilles, que l'on fait passer une bandelette (10) sur un organe (24) de saisie de la position qui, à l'aide des rubans de colle (6), détermine la position par rapport à une première extrémité (P) de la pile (40) et, au moyen d'un organe de commande électronique, commande un mécanisme (25) d'entraînement en position ainsi qu'un organe de coupe (26), que le mécanisme d'entraînement en position positionne les bandelettes (10) par rapport à la pile (40) à l'extrémité (P) de façon que les rubans de colle (6) de la bandelette (10) viennent se placer entre les rubans de colle (6) de la longueur de bandelette (10') située par-dessous et que la bandelette (10) est maintenue à l'extrémité (P), qu'en commençant à l'extrémité (P), la bandelette (10) est successivement collée, en allant en direction de l'autre extrémité (Q), avec la longueur de bandelette (10) située pardessous et précédemment empilée, et que, peu avant collage à l'autre extrémité (Q), la bandelette (10) est, à l'aide de l'organe de coupe (26), coupée à une longueur (Lᵤ) présélectionnée, qui est limitée par les extrémités (P, Q) et qui détermine la largeur désirée (L) de l'âme en nid d'abeilles (41) à fabriquer, après quoi le processus se répète.

2. Procédé selon la revendication 1, caractérisé par le fait que le mécanisme (25) d'entraînement en position est monté sur un chariot (20) qui se déplace sensiblement parallèlement à la surface et au moins sur toute la longueur (Lᵤ) des longueurs de bandelette empilées (10) et que, lors d'un premier parcours du chariot (20) en direction de la première extrémité (P), le chariot entraîne tout d'abord la bandelette (10) jusqu'au voisinage de l'extrémité (P) en déterminant simultanément la position des rubans de colle (6) par rapport à l'extrémité (P), que l'extrémité de la bandelette (10) est positionnée à l'extrémité (P) et y maintenue, que, lors d'un second parcours, venant à la suite, du chariot (20) en direction de l'autre extrémité (Q), une pression est exercée sur la bandelette (10) et au moins sur la longueur de bandelette (10) déposée en dernier lieu de façon telle que la bandelette (10) se colle, sur la longueur (Lᵤ) des longueurs de bandelette empilées (10'), avec la longueur de bandelette (10') empilée en dernier lieu, après quoi le parcours du chariot (20) se répète.

3. Procédé selon la revendication 1 ou 2, caractérisé par le fait que l'on fait passer simultanément plusieurs bandelettes (10), avec une disposition décalée des rubans de colle (6), sur un organe (24) de saisie de la position et qu'elles sont simultanément positionnées l'une au-dessus de l'autre, maintenues et collées.

4. Procédé selon la revendication 1 ou 2, caractérisé par le fait que l'on fait passer simultanément plusieurs bandelettes (10) sur, chacune, un organe (24) de saisie de la position correspondant à chaque bandelette (10) et que, simultanément, on les positionne l'une au-dessus de l'autre avec une disposition des rubans de colle (6) décalé en chicane, qu'on les maintient et qu'on les colle.

5. Procédé selon la revendication 1 ou 2, caractérisé par le fait que, lors du mouvement du chariot (20) en direction de l'extrémité (P), on fait passer simultanément une première bandelette (10) ou une première quantité (101) de bandelettes (10), avec une disposition des rubans de colle (6) décalée en chicane, sur un premier organe (24) de saisie de la position ou sur une quantité, correspondant à la première quantité (101) de bandelettes (10), ou moindre, d'organes (241) de saisie de la position et qu'on les positionne et qu'ensuite on les maintient et que, lors du mouvement du chariot en direction de l'autre extrémité (Q), on fait passer simultanément une seconde bandelette (10) ou une seconde quantité (102) de bandelettes (10) avec une disposition des rubans de colle (6) décalée en chicane, sur un second organe (24) de saisie de la position ou sur un nombre, correspondant au second nombre (102) de bandelettes (10), ou moindre, d'organes (242) de saisie de la position et qu'on les positionne, la quantité (101 ou 102) de bandelettes (10) déjà positionnées et maintenues étant collées, sur la longueur (Lᵤ) l'une à l'autre et avec la longueur de bandelette (10') située par-dessous ou bien la bandelette (10) positionnée et maintenue, étant collée, sur la longueur (Lᵤ), avec la longueur de bandelette (10') située par-dessous.

6. Procédé selon l'une des revendications 1 à 5, caractérisé par le fait que l'on déroule les bandelettes (10) à partir d'un rouleau de bandelettes (12).

7. Procédé selon l'une des revendications 1 à 6, caractérisé par le fait que pour fabriquer des rubans de colle (6), on emploie une colle présentant un pouvoir de réflexion abaissé par rapport au matériau de la bande.

8. Procédé selon la revendication 7, caractérisé par le fait que pour diminuer la réflexion, la colle contient un colorant.

9. Procédé selon l'une des revendications 1 à 8, caractérisé par le fait que le collage s'effectue à température élevée.

10. Procédé selon l'une des revendications 1 9, caractérisé par le fait que les rubans de colle (6) de la bandelette (10) viennent se placer au milieu entre des rubans de colle (6) de la longueur de bandelette (10') située par-dessous.

11. Procédé selon l'une des revendication 1 à 10, caractérisé par le fait que comme feuille en forme de bande (4), on emploie une bande ou une feuille d'aluminium ou d'un alliage d'aluminium.

12. Procédé selon l'une des revendication 1 à 11, caractérisé par le fait que l'on déploie l'âme en nid d'abeilles (41) pour obtenir des cellules hexagonales de nids d'abeilles (80).

13. Dispositif pour la mise en oeuvre du procédé selon l'une des revendications 1 à 12, caractérisé par le fait que les organes (24, 211, 242) de saisie de la position, au moins un mécanisme (25) d'entraînement en position, au moins un organe de coupe (26) et un rouleau encolleur levable (21) pour coller la ou les bandelettes (10) avec la longueur supérieure de bandelettes (10') de la pile (40) sont montés sur un chariot (20) qui est disposé, mobile, sur des guidages (30) de façon telle que, par son sommet (R), le rouleau encolleur (21) peut enduire sur toute sa largeur (Lᵤ) un organe (60) de groupage des nids d'abeilles disposé en dessous de lui, que l'intervention de la pression et du relèvement de température sur la ou les bandelettes (10) et au moins sur la longueur supérieure de bandelettes (10') est assurée par le rouleau encolleur (21) et qu'au moins à une extrémité de l'organe (60) de groupage des nids d'abeilles est disposée une pince (32) pour maintenir la ou les bandelettes (10).

14. Dispositif selon la revendication 13, caractérisé par le fait qu'en avant de l'organe (24) de saisie de la position, le chariot (20) présente un taquet (22) pour maintenir la bandelette (10) pendant la phase d'arrêt du mécanisme (25) d'entraînement en position, ainsi qu'une régulation (23) de la traction de la bande.

15. Dispositif selon la revendication 14, caractérisé par le fait que pour maintenir constante la tension de la bandelette (10) entre l'organe (24) de saisie de la position et le taquet (22) d'arrêt de la bande sont disposés une régulation (23) de la traction de la bande et éventuellement, en présence d'un rouleau de bandelettes (12), un frein de bande (14) agissant sur ce rouleau.

16. Dispositif selon l'une des revendications 13 à 15, caractérisé par le fait que l'organe (60) de groupage des nids d'abeilles est constitué d'au moins une paire de mors de bridage (34) disposés parallèlement à la direction de la pile (40) qui se constitue, au moins un mors de bridage (34) pouvant s'expanser.

17. Dispositif selon l'une des revendications 13 à 16, caractérisé par le fait qu'au démarrage l'organe (60) de groupage des nids d'abeilles est constitué d'une table (33) disposée parallèlement aux guidages (60) et pouvant s'abaisser perpendiculairement à ces guidages.

18. Dispositif selon l'une des revendications 13 à 17, caractérisé par le fait que le rouleau encolleur (21) est chauffant.

19. Dispositif selon l'une des revendications 13 à 18, caractérisé par le fait que la pression du rouleau encolleur (21), pour le collage de la ou des bandelettes (10) et de la longueur supérieure de bandelettes (10') de la pile (40) est opérée et commandée par au moins un vérin (35), de préférence en liaison avec la descente de la table (3).

20. Dispositif selon l'une des revendications 13 à 19. caractérisé par le fait que l'organe (24) de saisie de la position est une cellule photo-électrique.

21. Dispositif selon l'une des revendications 13 à 20, caractérisé par le fait que sur le chariot (20) se trouvent également le rouleau ou les rouleaux de bandelettes (12).

22. Dispositif selon l'une des revendications 13 à 21, caractérisé par le fait que, pour déployer la pile (40) quittant l'organe (60) de groupage des nids d'abeilles pour donner une âme en nid d'abeilles (41) déployée, est disposé au moins un rouleau rotatif (50) qui saisit toute la longueur (Lᵤ) de la pile (40) et qui est muni en surface de brosses (49) qui interviennent en tirant sur les longueurs de bandelette (10') de la pile (40) perpendiculairement à la direction de l'empilement et qu'entre le ou les rouleaux (50) et la pile (40) se trouve un dispositif de freinage (50) qui exerce sur la pile (40) une force de retenue qui est inférieure à la force de traction du ou des rouleaux (50) munis de brosses (49).

23. Dispositif selon la revendication 22, caractérisé par le fait que le rouleau (50) est muni d'un mécanisme d'entraînement.

24. Dispositif selon la revendication 23, caractérisé par le fait que le dispositif de freinage (52) est une rangée de brosses qui saisit, au moins d'un côté, toute la longueur (Lᵤ) des longueurs de bandelette (10').

25. Application de l'âme en nid d'abeilles (41), déployée, fabriquée selon le procédé conforme à l'une des revendications 1 à 12, en tant qu'âme en nid d'abeilles de panneaux sandwich (90) fabriqués en continu et présentant au moins une couche de revêtement (42).

26. Application de l'âme en nid d'abeilles (41), déployée, fabriquée selon le procédé conforme à l'une des revendications 1 à 12, en tant qu'âme en nid d'abeilles, à partir d'une feuille en bande (4), de panneaux sandwich (90) fabriqués en continu et présentant au moins une couche de revêtement (42) la feuille en bande (4) et la couche de revêtement (42) étant constituées d'aluminium ou d'un alliage d'aluminium.
